# EUROPÄISCHE PATENTSCHRIFT

(11) **EP 3 301 310 B1**
(45) Veröffentlichungstag und Bekanntmachung des Hinweises auf die Patenterteilung: **27.10.2021**
(21) Anmeldenummer: 16191520.2
(22) Anmeldetag: 29.09.2016
(51) Int. Cl.: F16B 5/06, F16B 11/00, F16B 43/00, F16B 19/00

(54) **BEFESTIGUNGSMONTAGESATZ, BAUTEILANORDNUNG UND VERFAHREN ZUR AUSBILDUNG EINER BAUTEILANORDNUNG**
MOUNTING KIT, COMPONENT ASSEMBLY AND METHOD FOR FORMATION OF A COMPONENT ASSEMBLY
VISSERIE DE FIXATION, SYSTÈME DE COMPOSANT ET PROCÉDÉ DE CONFORMATION D'UN SYSTÈME DE COMPOSANT

(43) Veröffentlichungstag der Anmeldung: 04.04.2018
(73) Patentinhaber: Airbus Defence and Space GmbH, 82024 Taufkirchen (DE)
(72) Erfinder: Geßler, Andreas, 85540 Haar (DE); Meer, Thomas, 85658 Egmating (DE); Scheid, Peter, 82380 Peißenberg (DE); Thum, Christian, 86720 Nördlingen (DE)
(74) Vertreter: Isarpatent

(56) Entgegenhaltungen:
- EP-A1- 1 239 114
- DE-U1-202010 011 671
- US-A1- 2013 330 145
- US-B1- 9 403 558

## Beschreibung

Die vorliegende Erfindung betrifft einen Befestigungsmontagesatz, eine Bauteilanordnung und ein Verfahren zur Ausbildung einer Bauteilanordnung.

Bei der Montage von Baugruppen können überlappende Bauteile der Baugruppe in vielfältiger Weise miteinander verbunden werden. Insbesondere bei der Montage von Luftfahrzeugen wird dies oftmals durch Niet- oder Schraubverbindungen realisiert, bei denen sich ein Schaft des Niets oder der Schraube durch in den Bauteilen ausgebildete Durchgangsbohrungen erstreckt. Um eine zügige Montage der Bauteile zu gewährleisten und eine Nachbearbeitung der Bohrungen während der Montage zu vermeiden, werden die Bauteile üblicherweise vor deren Montage entsprechend der im montierten Zustand der Bauteile beabsichtigten Relativposition zueinander angeordnet, provisorisch fixiert und die Durchgangsbohrungen fluchtend ausgebildet. Dies erfordert bei der Montage eine präzise Anordnung der Bauteile relativ zueinander innerhalb eines engen Toleranzbereichs.

Die US 2013/0330145 A1 offenbart eine Bauteilanordnung mit einem ersten und einem zweiten Bauteil, welche durch einen Befestigungsmontagesatz verbunden sind. Der Befestigungsmontagesatz weist einen Schraubbolzen auf, dessen Schaft sich durch in den Bauteilen ausgebildete Durchgangsbohrungen hindurch erstreckt und an dessen Ende eine Mutter aufgeschraubt ist. Die Durchgangsbohrungen sind mit einem Übermaß gegenüber dem Bolzen ausgeführt. Ein sich aufgrund dieses Übermaßes zwischen dem Schaft und den Bauteilen erstreckender Freiraum ist mit einem Füllmaterial ausgefüllt, welches über eine in dem Schaft ausgebildete Bohrung in den Freiraum eingebracht wird. Zur Entlüftung des Freiraums während des Einbringens des Füllmaterials weist die Mutter einen Einschnitt auf. Dadurch sollen Lufteinschlüsse in dem Füllmaterial vermieden werden.

Es ist eine der Aufgaben der vorliegenden Erfindung einen Befestigungsmontagesatz bereitzustellen, welcher eine Montage der Bauteile einer Bauteilanordnung in verbesserter Weise, insbesondere hinsichtlich der mechanischen Festigkeit der Verbindung, ermöglicht.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Zusammenhang mit der Beschreibung.

Nach einem ersten Aspekt der Erfindung ist ein Befestigungsmontagesatz vorgesehen, mit einem Bolzen mit einem Anlageabschnitt und einem sich von diesem aus in einer Längsrichtung erstreckenden Schaft, welcher einen sich entlang der Längsrichtung erstreckenden Injektionslängskanal und einen sich zwischen diesem und einer Außenumfangsfläche des Schafts erstreckenden Injektionsquerkanal aufweist, mit einem an dem Schaft fixierbaren Bolzensicherungselement und mit einer zwischen dem Bolzensicherungselement und dem Anlageabschnitt des Bolzens anordenbaren Scheibe mit einer Ausnehmung, durch welche der Schaft des Bolzens hindurchführbar ist, und einer sich von einem Umfangsrand der Scheibe in Richtung der Ausnehmung erstreckenden äußeren Entlüftungsnut, welche in eine sich entlang der Ausnehmung erstreckende innere Entlüftungsnut einmündet.

Erfindungsgemäß wird demnach ein Befestigungsmontagesatz oder -bausatz angegeben, welche einen Bolzen, eine Scheibe und ein Bolzensicherungselement aufweist. Der Bolzen weist insbesondere einen Anlageabschnitt oder Klemmabschnitt auf, welcher zur Anlage an eines der zu verbindenden Bauteile vorgesehen ist. Weiterhin weist der Bolzen einen länglichen Schaft zur Durchführung durch in den Bauteilen ausgebildete Bohrungen auf. In dem Schaft ist ein sich entlang des Schafts erstreckender erster Kanal oder Injektionslängskanal und ein zweiter Kanal oder Injektionsquerkanal ausgebildet. Der zweite Kanal erstreckt sich zwischen dem ersten Kanal zu einer Außenumfangsfläche oder Hüllfläche des Schafts, insbesondere mündet der zweite Kanal an einer Öffnung der Außenumfangsfläche und stellt somit eine fluidleitende Verbindung zwischen dem ersten Kanal und einer die Öffnung der Außenumfangsfläche des Schafts umgebenden Umgebung her. Durch die Injektionskanäle ist somit ein härtbares Füllmaterial in einem flüssigen Aggregatszustand an der Öffnung der Außenumfangsfläche des Schafts ausbringbar. Insbesondere kann auf diese Weise eine sich zwischen dem Schaft und einer Bohrungsleibung einer in einem der zu verbindenden Bauteile ausgebildeten Bohrung erstreckender Toleranzraum zum Toleranzausgleich mit dem Füllmaterial ausgefüllt werden. Dies erlaubt weiterhin zumindest eine der Durchgangsbohrungen in den zu verbindenden Bauteilen mit einem größeren Durchmesser als dem Durchmesser des Bolzenschafts auszuführen. Dadurch kann die Anordnung der Bauteile zueinander mit größerer Toleranz erfolgen. Die Durchgangsbohrungen können damit insbesondere ohne eine provisorische Fixierung der zu verbindenden Bauteile aneinander ausgebildet werden, da durch den durch den Befestigungsmontagesatz größere Positionstoleranzen für die Bohrungen ermöglicht werden.

Die Scheibe ist zur Anlage an das jeweils andere der zu verbindenden Bauteile, also dasjenige Bauteil, an welchem der Anlageabschnitt des Bolzens nicht anliegt, vorgesehen. Die Scheibe weist eine Ausnehmung auf, durch welche der Schaft des Bolzens durchführbar ist. Weiterhin weist die Scheibe eine innere Entlüftungsnut und eine äußere Entlüftungsnut auf. Die äußere Entlüftungsnut erstreckt sich von einem Umfangsrand oder einer Umfangsfläche der Scheibe in Richtung der Ausnehmung und mündet in die innere Entlüftungsnut ein. Die innere und die äußere Entlüftungsnut erstrecken sich auf einer Oberfläche der Scheibe bzw. sind durch die Oberfläche der Scheibe ausgebildet. Insbesondere verläuft die innere Entlüftungsnut entlang der Ausnehmung. Die Entlüftungsnut erstreckt sich also im montierten Zustand der Befestigungseinrichtung über zumindest einen Abschnitt des Umfangs des Schafts des Bolzens. Damit wird vorteilhaft die Möglichkeit zur Luftabfuhr aus dem Toleranzraum während des Zuführens des Füllmaterials in diesen verbessert. Die innere Entlüftungsnut schafft insbesondere einen Luftabfuhrkanal, welcher sich auch in von der äußeren Umfangsnut entfernt gelegene Bereiche der Scheibe erstreckt und damit lokal entstehende Lufteinschlüsse durch Abfuhr der Luft in die äußere Entlüftungsnut verhindert. Aufgrund der Verhinderung von Lufteinschlüssen wird die mechanische Belastbarkeit des Füllmaterials im gehärteten Zustand und damit der Verbindung insgesamt verbessert.

Das Bolzensicherungselement ist zum Klemmen der zu verbindenden Bauteile zwischen der Scheibe und dem Anlageabschnitt des Bolzens vorgesehen.

Der Anlageabschnitt kann allgemein durch eine von der Umfangsfläche des Schafts des Bolzens vorspringende Struktur ausgebildet sein. Bevorzugt ist der Anlageabschnitt in Bezug auf die Längsrichtung an einem Endbereich des Bolzens vorgesehen. Als Anlageabschnitt kann insbesondere ein Kopf, also ein umlaufender, von der Umfangsfläche vorspringender Ansatz, vorgesehen sein. Dadurch wird vorteilhaft ein große Anlagefläche bereitgestellt, wodurch Spannungen an der Bauteiloberfläche verringert werden. Auch kann der Anlageabschnitt durch eine oder mehrere vorspringende diskrete Ansätze ausgebildet sein. Dies verringert den Materialaufwand zur Ausbildung des Anlageabschnitts und damit das Gewicht des Befestigungsmontagesatzes. Der Anlageabschnitt kann einstückig mit dem Schaft ausgebildet sein. Auch kann der Anlageabschnitt als ein von dem Schaft separates Teil ausgeführt sein, das mit diesem insbesondere lösbar verbunden ist. Beispielsweise kann der Anlageabschnitt als eine Mutter ausgebildet sein, welche auf den ersten Endabschnitt des Schafts aufschraubbar ist.

Die Scheibe weist bevorzugt eine ringförmige Gestalt auf. Durch eine solche, im Wesentlichen zylindrische Scheibe kann aufgrund deren annähernd rotationssymmetrischer Form eine besonders einfache Montage erfolgen.

Die Scheibe, der Bolzen sowie das Bolzensicherungselement können jeweils insbesondere aus einem Metallmaterial gebildet sein, bevorzugt einem Stahl. Insbesondere kann auch ein Material auf Titan- oder Aluminiumbasis verwendet werden. Letztgenannte Materialgruppen weisen vorteilhaft eine hohe mechanische Festigkeit bei geringem Gewicht auf.

Gemäß einer bevorzugten Ausführungsform des Befestigungsmontagesatzes ist vorgesehen, dass sich die innere Entlüftungsnut als geschlossener Ring um die Ausnehmung herum erstreckt. Auf diese Weise wird ein Entlüftungskanal geschaffen, welcher sich in einem montierten Zustand um den gesamten Umfang des Schafts des Bolzens herum erstreckt. Damit werden Lufteinschlüsse unabhängig von dem Ort, an dem diese sich bilden, zuverlässig verhindert und damit die Qualität der Verbindung der mit dem Befestigungsmontagesatz verbundenen Bauteile weiter erhöht.

Besonders vorteilhaft erstreckt sich die innere Entlüftungsnut konzentrisch um die Ausnehmung herum. Dies bietet den Vorteil, dass die innere Entlüftungsnut in Bezug auf die Umfangsrichtung an jedem Punkt in etwa einen gleichen Abstand zum Schaft des Bolzens aufweist und damit insbesondere im Bereich des Schafts Lufteinschlüsse zuverlässig vermieden werden.

Gemäß einer weiteren vorteilhaften Ausführungsform weisen die äußere Entlüftungsnut und die innere Entlüftungsnut jeweils eine Nuttiefe in einem Bereich zwischen 0,1 mm und 1 mm auf. In diesem Bereich der Nuttiefe wird vorteilhaft eine zuverlässige Luftausströmung ermöglicht und gleichzeitig die benötigte Menge an Füllmaterial gering gehalten.

Die äußere und die innere Entlüftungsnut können jeweils gleiche Nuttiefen aufweisen. Dies ist insbesondere fertigungstechnischen vorteilhaft. Es ist auch denkbar, die äußere und die innere Entlüftungsnut mit verschiedenen Nuttiefen auszubilden. Beispielsweise kann die äußere Entlüftungsnut eine größere Nuttiefe aufweisen als die innere Entlüftungsnut. Dadurch wird der durch die äußere Entlüftungsnut gebildete Strömungswiderstand für ausströmende Luft vorteilhaft verringert.

Bevorzugt weisen die äußere und die innere Entlüftungsnut jeweils gleiche Querschnittsformen auf, da dies fertigungstechnisch vorteilhaft ist. Insbesondere kann jeweils eine U-förmige, eine rechteckförmige, eine V-förmige oder ähnliche Querschnittsform vorgesehen sein. Selbstverständlich können die äußere und die innere Entlüftungsnut jeweils voneinander verschiedene Querschnittsformen aufweisen.

Eine besonders bevorzugte Ausführungsform sieht vor, dass die Scheibe einstückig mit dem Bolzensicherungselement ausgebildet ist. Dadurch wird die Anzahl der Komponenten des Befestigungsmontagesatzes vorteilhaft verringert. Die Scheibe und das Bolzensicherungselement sind damit in einem Schritt und als ein Teil montierbar.

Gemäß einer weiteren Ausführungsform erstreckt sich der Injektionslängskanal von dem Anlageabschnitt aus in den Schaft erstreckt. Dies bietet den Vorteil, dass sich der Injektionskanal von einem in der Regel gut zugänglichen Bereich aus erstreckt, wodurch die Injektion von Füllmaterial erleichtert wird.

Alternativ hierzu kann sich der Injektionslängskanal auch von einem in Bezug auf die Längsrichtung entgegengesetzt zu dem Anlageabschnitt gelegenen Ende aus in den Schaft erstrecken.

Generell kann vorgesehen sein, dass der Injektionslängskanal sich von in Bezug auf die Längsrichtung stirnseitigen Ende des Schafts des Bolzens aus erstreckt. Dadurch kann der Injektionslängskanal besonders einfach ausgebildet werden, beispielsweise als Bohrung.

Der Injektionslängskanal und der Injektionsquerkanal weisen jeweils bevorzugt einen Durchmesser in einem Bereich zwischen 0,5 mm und 2,5 mm auf. In diesem Bereich des Durchmessers wird vorteilhaft eine große Zufuhrrate des Füllmaterials ermöglicht.

Gemäß einer bevorzugten Ausführungsform ist das Bolzensicherungselement als eine Hülse ausgebildet ist, welche ein zum Eingriff in ein an dem Schaft ausgebildetes Außengewinde vorgesehenes Innengewinde aufweist. Das Bolzensicherungselement ist damit als eine auf den Schaft des Bolzens aufschraubbare Hülse ausgebildet. Damit kann durch Kontrolle des Drehmoments, mit dem die Hülse angezogen wird, eine gewünschte Klemmkraft zwischen dem Anlageabschnitt des Bolzens und der Scheibe eingestellt werden. Einerseits wird dadurch eine gute Abdichtung des Toleranzraums durch die Scheibe erzielt, sodass lediglich die äußere Entlüftungsnut einen Fluidaustausch zwischen der Umgebung und dem Toleranzausgleichsraum zulässt. Dadurch wird ein Austreten des Füllmaterials bei dessen Injektion an unerwünschten Stellen verhindert. Außerdem gewährleitstet die Kontrolle des Drehmoments eine Verhinderung von unzulässig hohen Spannungen an den Bauteiloberflächen im Bereich der Scheibe und/oder des Anlageabschnitts.

Gemäß einer vorteilhaften Weiterbildung weist die das Bolzensicherungselement bildende Hülse eine sich in einer Umfangsrichtung der Hülse erstreckende Einkerbung zur Bildung einer Sollbruchstelle der Hülse auf. Wird beim Aufschrauben auf den Schaft des Bolzens ein gewisses Drehmoment überschritten, reißt der in Bezug auf die Längsrichtung dem Bauteil bzw. der Scheibe zugewandte Teil der Hülse von dem restlichen Teil der Hülse ab. Hierbei weist der dem Bauteil bzw. der Scheibe zugewandte Teil kein Gewinde auf. Durch die Einkerbung wird eine einfache Möglichkeit bereitgestellt, das Anziehmoment zu begrenzen, ohne dass dieses während der Montage gemessen werden muss.

Alternativ zu einer Gewindehülse kann das Bolzensicherungselement auch als Schrumpfhülse, welche auf den Schaft aufgeschrumpft wird, als Splint, als Sicherungsring oder dergleichen ausgebildet sein.

Gemäß einem zweiten Aspekt der Erfindung ist eine Bauteilanordnung vorgesehen. Diese weist ein eine erste Durchgangsbohrung aufweisendes erstes Bauteil und ein eine zweite Durchgangsbohrung aufweisendes zweites Bauteil, wobei das zweite Bauteil derart relativ zu dem ersten Bauteil angeordnet ist, dass die erste Durchgangsbohrung und zweite Durchgangsbohrung übereinander liegen, sowie einen Befestigungsmontagesatz auf. Der Befestigungsmontagesatz weist einen Bolzen mit einem an dem ersten Bauteil anliegenden Anlageabschnitt und einem sich von diesem aus in einer Längsrichtung durch die erste Durchgangsbohrung und die zweite Durchgangsbohrung hindurch erstreckenden Schaft auf, wobei der Schaft einen sich entlang der Längsrichtung erstreckenden Injektionslängskanal und einen sich zwischen diesem und einer Außenumfangsfläche des Schafts erstreckenden Injektionsquerkanal aufweist. Weiterhin umfasst der Montagebausatz eine an dem zweiten Bauteil anliegende Scheibe mit einer Ausnehmung, durch welche hindurch sich der Schaft des Bolzens erstreckt, und einer sich von einem Umfangsrand der Scheibe in Richtung der Ausnehmung erstreckenden äußeren Entlüftungsnut, welche in eine sich entlang der Ausnehmung erstreckende innere Entlüftungsnut einmündet. Dabei ist die innere Entlüftungsnut dem zweiten Bauteil zugewandt und in Bezug auf eine radiale Richtung innerhalb der zweiten Durchgangsbohrung angeordnet. Weiterhin weist der Befestigungsmontagesatz ein an dem Schaft des Bolzens fixiertes Bolzensicherungselement auf, welches das erste und das zweite Bauteil zwischen dem Anlageabschnitt des Bolzens und der Scheibe einklemmt. Ein sich zumindest zwischen dem Schaft und dem zweiten Bauteil innerhalb der zweiten Durchgangsbohrung erstreckender Innenraum ist mit einem gehärteten Füllmaterial gefüllt.

Erfindungsgemäß wird somit ein durch einen Befestigungsmontagesatz, welcher insbesondere durch einen Befestigungsmontagesatz gemäß einer der voranstehend beschriebenen Ausführungsformen gebildet sein kann, zusammengehaltener Klemmverband aus einem ersten und einem zweiten Bauteil angegeben. Der Schaft des Bolzens ragt durch die in den Bauteilen ausgebildeten Durchgangsbohrungen oder Durchgangöffnungen hindurch. Die erste und die zweite Durchgangsbohrung liegen hierbei zumindest teilweise übereinander. In Bezug auf eine Draufsicht auf die Durchgangsbohrungen überlappen diese oder die eine Durchgangsbohrung ist innerhalb der jeweils anderen gelegen. Die Mittelachsen der Bohrungen fluchten oder sind versetzt zueinander angeordnet. Weiterhin ist vorgesehen, dass die innere Entlüftungsnut dem zweiten Bauteil zugewandt ist. Insbesondere liegt die Scheibe mit der Oberfläche, an welcher die innere und die äußere Entlüftungsnut ausgebildet sind, an dem zweiten Bauteil an. Die innere Entlüftungsnut ist weiterhin in Bezug auf eine radiale Richtung innerhalb der an dem zweiten Bauteil ausgebildeten zweiten Durchgangsbohrung angeordnet. Demnach ist die innere Entlüftungsnut bei einer Draufsicht auf die zweite Durchgangsbohrung innerhalb einer diese begrenzenden Bohrungsleibung gelegen. Auf diese Weise wird vorteilhaft sichergestellt, dass die innere Entlüftungsnut in Fluidverbindung mit dem sich zwischen dem Bolzenschaft und der Bohrungsleibung erstreckenden Innenraum oder Toleranzraum steht. Der Innenraum ist mit einem gehärteten Füllmaterial gefüllt. Dies bietet den Vorteil, dass ein zwischen dem Schaft und der zweiten Bohrung bestehendes Spiel vermieden wird. Durch die Injektionskanäle des Bolzens kann das Füllmaterial auf besonders einfache Weise in flüssiger Form in den Innenraum injiziert werden und härtet dort. Im gehärteten Zustand weist das Füllmaterial eine hohe Festigkeit auf. Durch die Zuführbarkeit im flüssigen Zustand erfolgt eine zuverlässige Füllung des Innenraums, sodass eine Spiel bei verschiedenen Positionierungen der Bohrungen relativ zueinander zuverlässig ausgeglichen wird. Insbesondere aufgrund der inneren Entlüftungsnut werden hierbei Lufteinschlüsse besonders zuverlässig verhindert, sodass die Bauteilanordnung eine hohe mechanische Stabilität aufweist.

Gemäß einer bevorzugten Ausführungsform ist vorgesehen, dass das erste Bauteil und/oder das zweite Bauteil als Faserverbundbauteil ausgeführt ist. Insbesondere bei Faserverbundbauteilen bietet die Verwendung der oben beschriebenen Befestigungsmontagesatzes den Vorteil, dass eine Positionierung der Durchgangsbohrungen aufgrund der Möglichkeit der Injektion eines Füllmaterials mit relativ großer Toleranz zueinander ermöglicht wird. Dadurch können die Bohrungen in dem Faserverbundbauteil bereits vor der Montage ausgebildet werden und müssen nicht unter unerwünschter Staubentwicklung nach der Anordnung der Bauteile ausgebildet werden.

Gemäß einer vorteilhaften Weiterbildung der Bauteilanordnung ist das Füllmaterial durch ein Epoxidharz ausgebildet. Epoxidharze weisen den Vorteil auf, dass diese in einem gehärteten Zustand eine große Oberflächenhärte aufweisen. Damit wird eine große Lochleibungsfestigkeit gewährleistet. Insbesondere wird eine unerwünschte Deformierung des Füllmaterials infolge mechanischer Belastung und damit eine mögliche Verschiebung der Bauteile vermieden.

Gemäß einer besonders bevorzugten Ausführungsform ist vorgesehen, dass das Füllmaterial aus der äußeren Entlüftungsnut austritt. Insbesondere wurde hierbei in den Innenraum solange Füllmaterial eingeführt, bis dieses aus der Entlüftungsnut austritt. Dies bietet eine einfache Möglichkeit, die vollständige Ausfüllung des Innenraums zu kontrollieren. Auf diese Weise wird eine unvollständige Befüllung des Innenraums und damit mechanisch weniger stabile Bauteilanordnung zuverlässig verhindert.

Vorteilhaft kann insbesondere vorgesehen sein, dass die erste Durchgangsbohrung einen kleineren Durchmesser als die zweite Durchgangsbohrung aufweist und der Schaft des Bolzens an der die erste Durchgangsbohrung definierenden Innenfläche des ersten Bauteils anliegt. Der Bolzenschaft liegt somit an der Bohrungsleibung der ersten Durchgangsbohrung an. Die Ausbildung der Durchgangsbohrungen mit unterschiedlichen Durchmessern bietet den Vorteil, dass eine relativ große Toleranz bei der Positionierung der Bauteile relativ zueinander ermöglicht wird, da die erste und die zweite Durchgangsbohrung hierbei dennoch mit großer Zuverlässigkeit übereinander liegend anordenbar sind. Weiterhin wird durch den anliegenden Sitz des Schafts in der ersten Durchgangsbohrung bereits unerwünschtes Spiel verhindert und es muss lediglich der Innenraum zwischen dem Schaft und der Leibung der zweiten Durchgangsbohrung ausgefüllt werden. Dadurch wird nur eine geringe Menge an Füllmaterial ermöglicht und die mechanische Festigkeit wird aufgrund der direkten Anlage des Schafts an der Leibung der ersten Durchgangsbohrung weiter verbessert.

Gemäß einer weiteren vorteilhaften Ausführungsform fluchtet ein in Bezug auf die Längsrichtung dem Anlageabschnitt des Bolzens zugewandt gelegener Abschnitt eines Rands des Injektionsquerkanals des Bolzens mit einer dem zweiten Bauteil zugewandten Oberfläche des ersten Bauteils. Insbesondere reicht die Öffnung der Außenumfangsfläche des Schafts des Bolzens, an welcher der Injektionskanal in den Innenraum mündet, in Bezug auf die Längsrichtung bis an die Oberfläche des ersten Bauteils heran. Dabei liegt insbesondere ein Rand der Öffnung bündig mit der Oberfläche des ersten Bauteils. Infolge dieser Anordnung einer Austrittsöffnung des Injektionsquerkanals bildet sich eine äußerst gleichmäßige Fließfront des Füllmaterials während dessen Injektion in den Innenraum aus. Dadurch wird zuverlässig die Bildung von Lufteinschlüssen verringert.

Ein dritter Aspekt der Erfindung betrifft ein Verfahren zur Ausbildung einer Bauteilanordnung mit folgenden Verfahrensschritten:
- Anordnen eines ersten Bauteils und eines zweiten Bauteils relativ zueinander derart, dass eine erste Durchgangsbohrung des ersten Bauteils und zweite Durchgangsbohrung des zweiten Bauteils übereinander liegen;
- Anordnen einer Scheibe, welche eine Ausnehmung und eine sich von einem Umfangsrand der Scheibe in Richtung der Ausnehmung erstreckende äußere Entlüftungsnut, die in eine sich entlang der Ausnehmung erstreckende innere Entlüftungsnut einmündet, aufweist, an dem zweiten Bauteil derart, dass die innere Entlüftungsnut dem zweiten Bauteil zugewandt und in Bezug auf eine radiale Richtung innerhalb der zweiten Durchgangsbohrung angeordnet ist;
- Durchführen eines sich von einem Anlageabschnitt aus in einer Längsrichtung erstreckenden Schafts eines Bolzens durch die erste und die zweite Durchgangsbohrung sowie durch die Ausnehmung der Scheibe;
- Einklemmen des ersten und des zweiten Bauteils zwischen dem Anlageabschnitt des Bolzens und der Scheibe durch Fixieren eines Bolzensicherungselements an dem Schaft des Bolzens;
- Injizieren eines härtbaren Füllmaterials in einen sich entlang der Längsrichtung erstreckenden Injektionslängskanal des Schafts des Bolzens und durch einen sich zwischen dem Injektionsquerkanal und einer Außenumfangsfläche des Schafts erstreckenden Injektionsquerkanal hindurch Ausfüllen eines sich zumindest zwischen dem Schaft und dem zweiten Bauteil innerhalb der zweiten Durchgangsbohrung erstreckenden Innenraums mit dem Füllmaterial; und
- Härten des Füllmaterials.

Das erfindungsgemäße Verfahren sieht folglich zunächst die Anordnung der Bauteile relativ zueinander vor, wobei die erste und die zweite Durchgangsbohrung übereinanderliegend angeordnet werden. Weiterhin erfolgt ein Verbinden der Bauteile mittels des Befestigungsmontagesatzes. Hierzu wird der Schaft des Bolzens durch die Durchgangsbohrungen der Bauteile gesteckt. Die Scheibe kann bereits vorher an dem zweiten Bauteil angeordnet sein oder nach dem Durchstecken des Schafts mit deren Ausnehmung auf den Schaft aufgesteckt werden. Die innere Entlüftungsnut der Scheibe wird hierbei der zweiten Durchgangsbohrung zugewandt angeordnet. Insbesondere liegt die innere Entlüftungsnut der Scheibe in Bezug auf die radiale Richtung innerhalb des durch die Leibung der zweiten Durchgangsbohrung begrenzten Radiusbereichs. Weiterhin wird das Bolzensicherungselement an dem Schaft des Bolzens fixiert, wodurch die Bauteile zwischen der Scheibe und dem Anlageabschnitt des Bolzens geklemmt werden. Außerdem wird das Füllmaterial, insbesondere in einem flüssigen Zustand, in den Innenraum zugeführt und dort gehärtet.

Wie bereits zur Bauteilanordnung und dem Befestigungsmontagesatz ausgeführt, bietet die Injektion eines Füllmaterials in den Innenraum zwischen Schaft und der Leibung der zweiten Durchgangsbohrung den Vorteil, dass eine formschlüssige Ummantelung des Bolzenschafts gebildet wird, welche an der Bohrungsleibung anliegt und sich von selbst der Form des Innenraums anpasst. Durch die Ausbildung der Scheibe insbesondere mit einer inneren Entlüftungsnut wird zuverlässig die Ausbildung von Lufteinschlüssen in dem Füllmaterial verhindert, wodurch die Festigkeit der Verbindung zwischen den Bauteilen verbessert wird. Auch ist das Verfahren besonders schnell und einfach durchführbar.

Durch das vorbeschriebene Verfahren kann insbesondere ein Bauteilanordnung gemäß einer der voranstehend beschriebenen Ausführungsformen auf effiziente Weise und mit einer hoher mechanischen Stabilität der Verbindung hergestellt werden.

Das Härten des Füllmaterials kann insbesondere ein Erwärmen des Material umfassen. Dadurch wird eine die Härtung bewirkende chemische Reaktion gefördert und dadurch der Härtungsvorgang vorteilhaft beschleunigt.

Nach der Injektion kann auch in den Injektionskanälen noch Füllmaterial verbleiben. Diese führt vorteilhaft zu einer Füllung der Kanäle. Insbesondere wird dadurch der Kraftfluss innerhalb des Bolzenschafts verbessert, was sich günstig auf die mechanische Stabilität des Bolzens auswirkt.

Gemäß einer vorteilhaften Weiterbildung wird solange Füllmaterial injiziert, bis dieses aus der äußeren Entlüftungsnut austritt. Dadurch wird zuverlässig eine vollständige Füllung des Innenraums mit Füllmaterial erreicht. Weiterhin wird eine einfache Kontrollmöglichkeit zur Überprüfung der Vollständigkeit der Füllung geschaffen.

Ein weiterer Aspekt der Erfindung betrifft ein Luftfahrzeug mit einer Bauteilanordnung nach einer der voranstehenden Ausführungsformen. Insbesondere kann das erste Bauteil durch ein in eine Rumpfstruktur des Luftfahrzeugs zu integrierende Komponente, wie beispielsweise eine Bodenplatte, ein Teil eines Kabinenmonuments oder dergleichen ausgebildet sein. Das zweite Bauteil kann insbesondere durch ein Strukturbauteil der Rumpfstruktur gebildet sein, beispielsweise durch einen Spant, eine Rippe, einen Stringer oder dergleichen. Insbesondere bei der Verwendung im Flugzeugbau bieten das oben beschriebene Verfahren, die oben beschriebene Bauteilanordnung sowie der oben beschriebene Befestigungsmontagesatz den Vorteil, dass eine Nachbearbeitung der Bauteile während der Montage nicht notwendig ist. Auf diese Weise wird bei der Montage von Luftfahrzeugen unerwünschter Staub vorteilhaft vermieden, welcher infolge der Nachbearbeitung auftreten würde.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Hierin wird unter einem "Faserverbundbauteil" oder einem "faserverstärkten Bauteil" allgemein ein Bauteil verstanden, welches einen Faserwerkstoff aufweist, der aus einer Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen gebildet ist, wobei der der Faserwerkstoff in ein Harz- oder Matrixmaterial, wie z.B. einem duroplastischen, thermoplastischen, elastomeren Harz oder allgemein einem Kunststoffharz oder dergleichen, eingebettet ist.

Im Folgenden wird die Erfindung unter Bezugnahme auf die Figuren der Zeichnungen erläutert. Von den Figuren zeigen:
- Fig. 1: eine schematische Schnittansicht eines Befestigungsmontagesatzes gemäß einem bevorzugten Ausführungsbeispiel der vorliegenden Erfindung;
- Fig. 2: eine schematische Schnittansicht eines Bolzens des Befestigungsmontagesatzes gemäß einem Ausführungsbeispiel der vorliegenden Erfindung;
- Fig. 3: eine perspektivische Ansicht einer Scheibe des Befestigungsmontagesatzes gemäß einem Ausführungsbeispiel der vorliegenden Erfindung;
- Fig. 4: eine schematische Schnittansicht der Scheibe, welche sich bei einem Schnitt entlang der in Fig. 3 dargestellten Linie A-A ergibt;
- Fig. 5: eine schematische Schnittansicht einer Bauteilanordnung gemäß einem Ausführungsbeispiel der vorliegenden Erfindung während der Durchführung eines Verfahrens gemäß einem Ausführungsbeispiel der vorliegenden Erfindung;
- Fig. 6: eine schematische Schnittansicht der Bauteilanordnung gemäß einem bevorzugten Ausführungsbeispiel der vorliegenden Erfindung nach Beendigung des Verfahrens gemäß einem Ausführungsbeispiel der vorliegenden Erfindung;
- Fig. 7: eine schematische Ansicht eines Luftfahrzeugs gemäß einem Ausführungsbeispiel der vorliegenden Erfindung; und
- Fig. 8: eine schematische Schnittansicht des Luftfahrzeugs, welche sich bei einem Schnitt entlang der in Fig. 7 dargestellten Linie B-B ergibt.

In den Figuren bezeichnen dieselben Bezugszeichen gleiche oder funktionsgleiche Komponenten, soweit nichts Gegenteiliges angegeben ist.

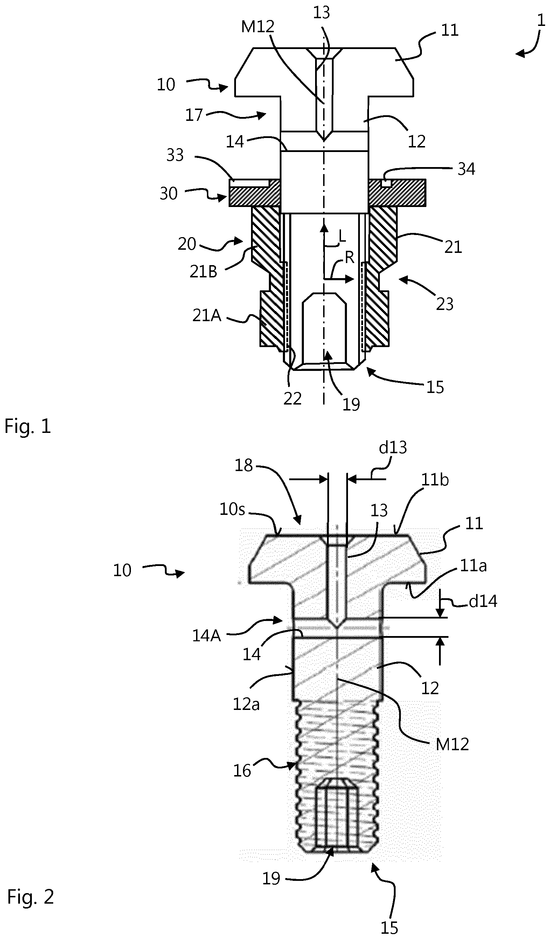

Fig. 1 zeigt beispielhaft einen Befestigungsmontagesatz 1. Der Befestigungsmontagesatz 1 weist einen Bolzen 10, ein Bolzensicherungselement 20 und eine Scheibe 30 auf.

Der Bolzen 10 ist in Fig. 2 einzeln dargestellt und weist insbesondere einen Anlageabschnitt 11 und einen Schaft 12 auf. Der Schaft 12 ist stabförmig ausgebildet und erstreckt sich in einer Längsrichtung L. Insbesondere kann der Schaft 12 einen kreisförmigen Querschnitt aufweisen. Wie in den Fig. 1 und 2 gezeigt ist, ist der Anlageabschnitt 11 vorzugsweise in Bezug auf die Längsrichtung L an einem ersten Endabschnitt 17 des Schafts 12 angeordnet. Der Anlageabschnitt 11 springt generell in einer radialen Richtung R von einer Umfangsfläche 12a des Schafts 12 vor. Die Fig. 1 und 2 sowie die Fig. 5 und 6 zeigen jeweils beispielhaft einen als Kopf ausgeführten Anlageabschnitt 11 mit einer umlaufenden, durchgehenden Anlagefläche 11a. Der Anlageabschnitt 11 kann jedoch beispielsweise auch durch diskrete, einzelne Ansätze gebildet sein, welche jeweils von der Umfangsfläche 12a des Schafts 12 vorspringen. Wie in den Fig. 1 und 2 sowie die Fig. 5 und 6 jeweils gezeigt ist, bildet der Anlageabschnitt 11 in Bezug auf die Längsrichtung L bevorzugt ein Ende 18 des Bolzens 10.

Wie in den Fig. 1, 2, 5 und 6 jeweils beispielhaft gezeigt ist, weist der Schaft 12 einen sich entlang der Längsrichtung L erstreckenden Injektionslängskanal 13 und einen sich zwischen dem Injektionslängskanal 13 und der Außenumfangsfläche 12a des Schafts 12 erstreckenden Injektionsquerkanal 14 auf. In den Figuren ist beispielhaft eine Erstreckung des Injektionslängskanals 13 in der Längsrichtung L, insbesondere entlang einer Mittelachse M12 des Schafts 12 gezeigt. Der Injektionslängskanal 13 kann jedoch auch seitlich versetzt zu der Mittelachse M12 und insbesondere generell entlang der Längsrichtung L verlaufen. Wie insbesondere in Fig. 2 gezeigt, erstreckt sich der Injektionslängskanal 13 vorzugsweise von dem Anlageabschnitt 11 aus in den Schaft 12. Wie z.B. in Fig. 2 gezeigt ist, kann der Injektionslängskanal 13 insbesondere als Bohrung von einer Stirnfläche 10s des Bolzens 10 aus, welche vorliegend durch eine in Bezug auf die Längsrichtung L entgegengesetzt zu der Anlagefläche 11a gelegene Stirnfläche 11b des Anlageabschnitts 11 gebildet ist, in den Schaft 12 eingebracht sein. Alternativ hierzu kann der Injektionslängskanal 13 sich von einem in Bezug auf die Längsrichtung L entgegengesetzt zu dem Anlageabschnitt 11 gelegenen Ende 15 des Bolzens aus in den Schaft 12 erstrecken (nicht gezeigt).

Der Injektionslängskanal 13 weist bevorzugt einen Durchmesser d13 in einem Bereich zwischen 0,5 mm und 2,5 mm auf. In den in den Figuren gezeigten Beispielen weist der Injektionslängskanal 13 einen kreisförmigen Querschnitt auf. Es sind jedoch auch andere Querschnittsformen denkbar, beispielsweise rechteckförmig, dreieckförmig oder dergleichen. In diesem Fall ist der Durchmesser insbesondere als der Durchmesser eines Kreises gegeben, dessen Flächeninhalt identisch zu dem Flächeninhalt der durch den Querschnitt des Injektionslängskanal 13 definierten Querschnittsfläche ist.

Der Injektionsquerkanal 14 verläuft zwischen dem Injektionslängskanal 13 und der Außenumfangsfläche 12a des Schafts 12. Insbesondere verbindet der Injektionsquerkanal 14 eine Öffnung 14A der Außenumfangsfläche 12a des Schafts 12 mit dem Injektionsquerkanal 14. In den Fig. 1, 2, 5 und 6 ist jeweils beispielhaft gezeigt, dass sich der Injektionsquerkanal 14 senkrecht zu der Mittelachse M12 des Schafts 12 erstreckt. Vorzugweise verläuft der Injektionsquerkanal 14 quer zu der Längsrichtung L, generell verläuft der Injektionsquerkanal 14 jedoch zwischen dem Injektionslängskanal 13 und der Außenumfangsfläche 12a des Schafts 12 und kann hierbei beliebige Neigungen gegenüber der Längsrichtung L annehmen. In den Fig. 1 und 2 ist der Injektionsquerkanal 14 beispielhaft als eine sich durch den Schaft 12 hindurch erstreckende Durchgangsbohrung ausgeführt. Der Injektionsquerkanal 14 kann jedoch auch als ein in dem Querschnitt des Schafts 12 endendes Sackloch ausgeführt sein. Auch ist denkbar, mehrere Injektionsquerkanäle 14 vorzusehen.

Der Injektionsquerkanal 14 weist bevorzugt einen Durchmesser d14 in einem Bereich zwischen 0,5 mm und 2,5 mm auf. In den in den Figuren gezeigten Beispielen weist der Injektionsquerkanal 14 einen kreisförmigen Querschnitt auf. Es sind jedoch auch andere Querschnittsformen denkbar, beispielsweise rechteckförmig, dreieckförmig oder dergleichen. In diesem Fall ist der Durchmesser insbesondere als der Durchmesser eines Kreises gegeben, dessen Flächeninhalt identisch zu dem Flächeninhalt der durch den Querschnitt des Injektionsquerkanals 14 definierten Querschnittsfläche ist.

Wie insbesondere in den Fig. 1 und 2 weiter zu erkennen ist, kann an der Außenumfangsfläche 12a des Schafts 12 ein Außengewinde 16 ausgebildet sein. Dieses kann in Bezug auf die Längsrichtung L insbesondere lediglich in einem Teilabschnitt der Außenumfangsfläche 12a ausgebildet sein.

Insbesondere Fig. 2 zeigt, dass an dem entgegengesetzt zu dem Anlageabschnitt 11 gelegenen Ende 15 des Schafts 12 ein Eingriffsbereich 19 ausgebildet sein kann. In den Fig. 1 und 2 sowie den Fig. 5 und 6 ist der Eingriffsbereich 19 insbesondere als eine sich in der Längsrichtung L in den Schaft 12 hinein erstreckende Ausnehmung mit einem Innensechskant ausgebildet. Der Eingriffsbereich 19 ist zum Eingriff mit einer Drehmomentaufbringungsvorrichtung vorgesehen.

In Fig. 1 ist der Befestigungsmontagesatz 1 in einem zusammengesetzten Zustand gezeigt, in dem das Bolzensicherungselement 20 an dem Schaft 12 des Bolzens 10 fixiert ist und die Scheibe 30 in Bezug auf die Längsrichtung L zwischen dem Bolzensicherungselement 20 und dem Anlageabschnitt 11 des Bolzens 10 angeordnet ist.

Fig. 1 zeigt beispielhaft eine vorteilhafte Gestaltung des Bolzensicherungselements 20 als eine Hülse 21. Die Hülse 21 weist ein Innengewinde 22 auf. Dieses kann in Bezug auf die Längserstreckung der Hülse 21 über deren gesamte Länge vorgesehen sein oder, wie in Fig. 1 beispielhaft gezeigt, lediglich in einem ersten Längsabschnitt 21A der Hülse 21. Wie in Fig. 1 weiterhin gezeigt ist, weist die Hülse 21 bevorzugt eine sich in einer Umfangsrichtung der Hülse 21 erstreckende Einkerbung 23 auf. Die Einkerbung 23 verringert lokal die Querschnittsdicke der Hülse 21 und ist in Bezug auf die Längserstreckung der Hülse 21 beispielsweise in einem Übergangsbereich von dem ersten Längsabschnitt 21A zu einem zweiten Längsabschnitt 21B der Hülse 21 angeordnet. Durch die Verringerung der Querschnittsdicke der Hülse wird durch die Einkerbung 23 eine Sollbruchstelle der Hülse 21 ausgebildet, an welcher die Hülse 21 bei Beaufschlagung mit einem vorbestimmten Drehmoment reißt oder bricht.

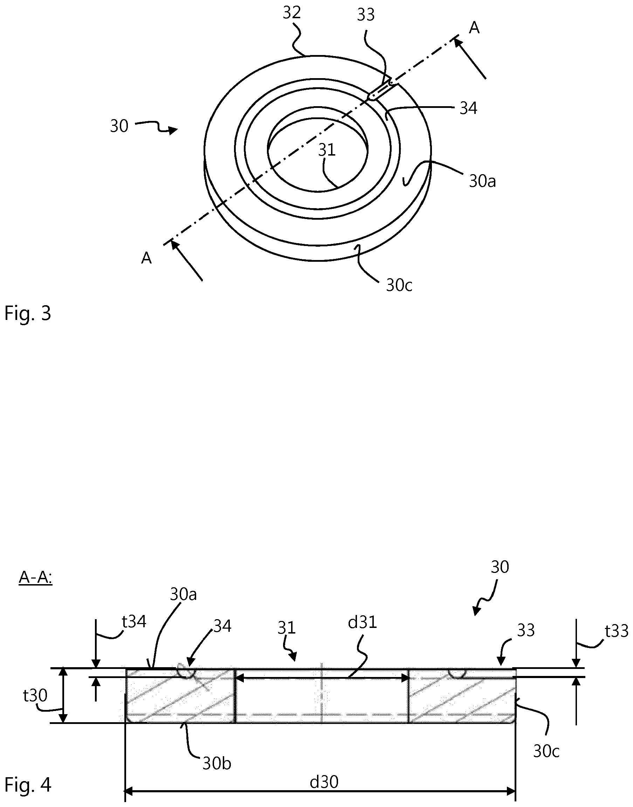

Die Fig. 3 und 4 zeigen jeweils die Scheibe 30. Die Scheibe 30 weist insbesondere eine erste Oberfläche 30a und eine entgegengesetzt zu dieser orientierte zweite Oberfläche 30b auf, wobei die erste und die zweite Oberfläche 30a, 30b durch eine Umfangsoberfläche 30c verbunden sind. Die Scheibe weist eine Ausnehmung 31 auf, durch welche der Schaft 12 des Bolzens 10 hindurchführbar ist, wie dies z.B. in Fig. 1 gezeigt ist. Die Ausnehmung 30 erstreckt sich insbesondere zwischen der ersten und der zweiten Oberfläche 30a, 30b der Scheibe 30. Bei der in Fig. 3 beispielhaft dargestellten Scheibe 30 ist die Ausnehmung 31 als eine kreisförmige Ausnehmung 31 ausgebildet. Insbesondere kann vorgesehen sein, dass die Ausnehmung 31 eine an die Querschnittsform des Schafts 12 des Bolzens 10 angepasste, also vorteilhaft die gleiche Querschnittsform aufweist. Wie in den Fig. 3 und 4 weiterhin gezeigt ist, weist die Scheibe 30 eine äußere Entlüftungsnut 33 und eine innere Entlüftungsnut 34 auf. Die äußere Entlüftungsnut 33 und die innere Entlüftungsnut 34 sind jeweils auf der bzw. durch die erste Oberfläche 30a der Scheibe 30 ausgebildet. Die äußere Entlüftungsnut 33 erstreckt sich von einem Umfangsrand 32 der Scheibe 30, insbesondere von der Umfangsoberfläche 30c der Scheibe 30 in Richtung der Ausnehmung 31. Die innere Entlüftungsnut 34 erstreckt sich entlang der Ausnehmung 31, wobei die äußere Entlüftungsnut 33 in die innere Entlüftungsnut 34 einmündet. Die äußere Entlüftungsnut 33 erstreckt sich somit insbesondere zwischen der Umfangsfläche 30c der Scheibe 30 und der inneren Entlüftungsnut 34.

Wie in Fig. 3 beispielhaft gezeigt ist, erstreckt sich die innere Entlüftungsnut 34 bevorzugt als geschlossener Ring, insbesondere konzentrisch, um die Ausnehmung 31 herum. Generell erstreckt sich die innere Entlüftungsnut 34 entlang der Ausnehmung 31. Insbesondere kann sich die innere Entlüftungsnut 34 somit auch lediglich über einen Teilabschnitt des Umfangs der Ausnehmung 31 erstrecken.

Wie in Fig. 4 beispielhaft gezeigt ist, weisen die innere und die äußere Entlüftungsnut 33, 34 vorteilhaft jeweils einen U-förmigen Querschnitt auf. Selbstverständlich sind auch andere Querschnittsformen denkbar, beispielsweise V-förmig, rechteckförmig oder dergleichen. Weiterhin weisen gemäß Fig. 4 die innere und die äußere Entlüftungsnut 33, 34 jeweils die gleiche Nuttiefe t33, t34 auf. Es ist jedoch auch denkbar, die innere und die äußere Entlüftungsnut 33, 34 jeweils mit verschiedenen Nuttiefen auszubilden. Bevorzugt weisen die äußere Entlüftungsnut 33 und die innere Entlüftungsnut 34 jeweils eine Nuttiefe t33, t34 in einem Bereich zwischen 0,1 mm und 1 mm auf.

In Fig. 1 und den Fig. 2 bis 6 ist die Scheibe 30 beispielhaft jeweils als ein von dem Bolzensicherungselement 20 separates Bauteil dargestellt. Alternativ hierzu kann die Scheibe 30 jedoch auch einstückig mit dem Bolzensicherungselement 20 ausgebildet sein (nicht dargestellt).

Die Scheibe 30 weist bevorzugt eine Dicke t30 in einem Bereich zwischen 0,8 mm und 2,5 mm. Ein Außendurchmesser d30 der Scheibe liegt bevorzugt in einem Bereich zwischen 5 mm und 20 mm. Ein Durchmesser d31 der Ausnehmung 31 liegt bevorzugt in einem Bereich zwischen 3 mm und 15 mm.

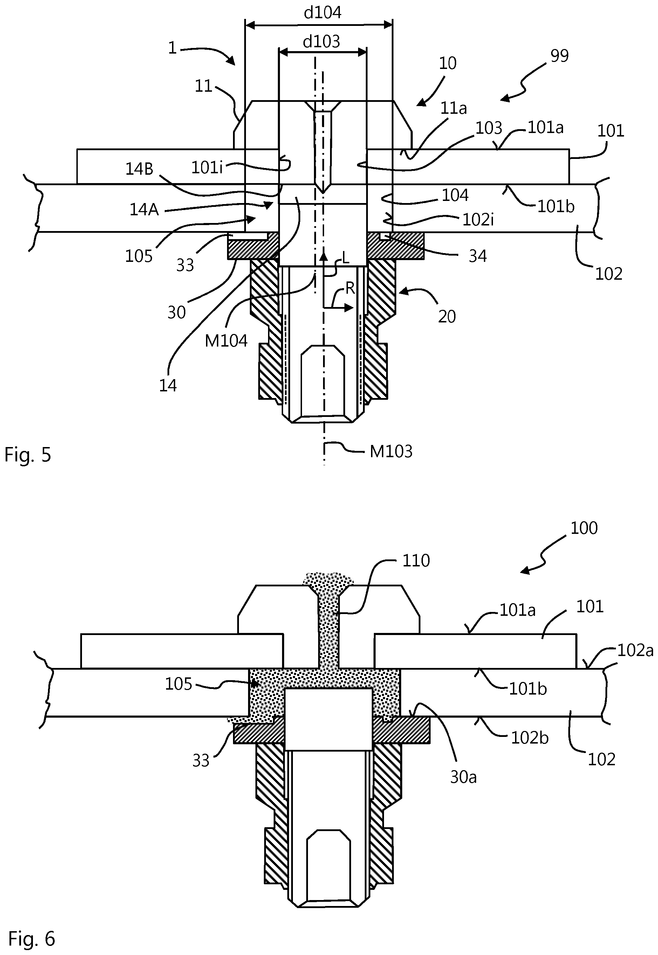

Fig. 5 zeigt beispielhaft eine Bauteilanordnung 100 während der Durchführung eines Verfahrens zu dessen Ausbildung. Insbesondere zeigt Fig. 5 eine Bauteil-Fixierungsanordnung 99 zur Bildung der Bauteilanordnung 100 mit ersten Bauteil 101, einem zweiten Bauteil 102 sowie der Befestigungsmontagesatz 1. Das erste Bauteil 101 weist eine erste Durchgangsbohrung 103 auf. Das zweite Bauteil 102 weist eine zweite Durchgangsbohrung 104 auf. Wie in Fig. 5 gezeigt, sind das erste und das zweite Bauteil 102 derart relativ zueinander angeordnet, dass die erste Durchgangsbohrung 103 und zweite Durchgangsbohrung 104 übereinander liegen. In den Fig. 5 und 6 liegt die erste Durchgangsbohrung 103 bei einer Draufsicht auf diese in Bezug auf die radiale Richtung R vollständig innerhalb der zweiten Durchgangsbohrung 104. Es kann jedoch auch ausreichend sein, dass die erste und die zweite Durchgangsbohrung 103, 104 lediglich überlappen. Wie Fig. 5 weiterhin zeigt, kann insbesondere vorgesehen sein, dass die erste und die zweite Durchgangsbohrung 103, 104 mit unterschiedlichen Durchmessern d103, d104 ausgeführt sind. Vorzugsweise weist die erste Durchgangsbohrung 103 einen kleineren Durchmesser d103 auf als die zweite Durchgangsbohrung 104, wie dies in den Fig. 5 und 6 beispielhaft gezeigt ist. Dies erlaubt die Anordnung der Bauteile 101, 102 relativ zueinander derart, dass die Mittelachsen M103, M104 der Durchgangsbohrungen 103, 104 in Bezug auf die radiale Richtung R versetzt zueinander angeordnet sind, die erste Durchgangsbohrung 103 aber dennoch in Bezug auf die radiale Richtung R innerhalb der zweiten Durchgangsbohrung 104 gelegen ist, wie dies in Fig. 5 beispielhaft gezeigt ist. Insbesondere liegt das zweite Bauteil 102 mit einer ersten Oberfläche 101a an einer zweiten Oberfläche 101b des ersten Bauteils 101 an, wie in Fig. 5 gezeigt ist.

Bevorzugt ist das erste Bauteil 101 aus einem Metallmaterial und das zweite Bauteil 102 als Faserverbundbauteil ausgeführt. Generell kann insbesondere zumindest eines der Bauteile 101, 102 als Faserverbundbauteil ausgeführt sein.

Wie in Fig. 5 gezeigt ist, erstreckt sich der Schaft 12 des Bolzens 10 des Befestigungsmontagesatzes 1 durch die erste Durchgangsbohrung 103 und zweite Durchgangsbohrung 104 hindurch. Weiterhin liegt der Anlageabschnitt 11 an dem ersten Bauteil 101 an. Insbesondere liegt die Anlagefläche 11a des Anlageabschnitts 11 an einer ersten Oberfläche 101a des ersten Bauteils 101 an, wobei die erste Oberfläche 101a des ersten Bauteils 101 entgegengesetzt zu der zweiten Oberfläche 101b des ersten Bauteils 101 orientiert ist.

Fig. 5 zeigt beispielhaft eine vorteilhafte Gestaltung, bei welcher der Schaft 12 mit dessen Außenumfangsfläche 12a an der die erste Durchgangsbohrung 103 definierenden Leibungsfläche oder Innenfläche 101i des ersten Bauteils 101 anliegt. Selbstverständlich kann sich zwischen der Außenumfangsfläche 12a des Schafts 12 und der Innenfläche 101i des ersten Bauteils 101 auch ein erster Toleranzraum (nicht gezeigt) erstrecken. Weiterhin erstreckt sich zwischen der Außenumfangsfläche 12a des Schafts 12 und einer die zweite Durchgangsbohrung 104 definierenden Leibungsfläche oder Innenfläche 102i des zweiten Bauteils 102 ein zweiter Toleranzraum, wie beispielhaft in Fig. 5 gezeigt ist. Der zweite Toleranzraum und der gegebenenfalls vorhandene erste Toleranzraum bilden gemeinsam einen Innenraum 105. Dieser erstreckt sich daher allgemein zumindest zwischen dem Schaft 12 und dem zweiten Bauteil 102 innerhalb der zweiten Durchgangsbohrung 104.

Wie in Fig. 5 außerdem gezeigt ist, erfolgt bevorzugt eine bestimmte Positionierung des Injektionsquerkanals 14 relativ zu der zweiten Oberfläche 101b des ersten Bauteils 101. Insbesondere fluchtet hierbei ein in Bezug auf die Längsrichtung L dem Anlageabschnitt 11 des Bolzens 10 zugewandt gelegener Abschnitt 14B eines Rands des Injektionsquerkanals 14 des Bolzens 10 mit der zweiten Oberfläche 101b des ersten Bauteils 101. Der Rand des Injektionsquerkanals 14 ist insbesondere durch den die Öffnung 14A definierenden Oberflächenbereich der Oberfläche 12a definiert.

Die Scheibe 30 liegt an dem zweiten Bauteil 102 an. Insbesondere liegt die Scheibe 30 mit der ersten Oberfläche 30a an einer entgegengesetzt zu der ersten Oberfläche 102a des zweiten Bauteils 102 orientierten zweiten Oberfläche 102b des zweiten Bauteils 102 an. Insbesondere ist die innere Entlüftungsnut 34 dem zweiten Bauteil 102 zugewandt und in Bezug auf die radiale Richtung R innerhalb der zweiten Durchgangsbohrung 104 angeordnet, wie dies beispielhaft in den Fig. 5 und 6 gezeigt ist.

Wie die Fig. 5 zeigt, ist das Bolzensicherungselement 20 an dem Schaft 12 des Bolzens 10 fixiert. In Fig. 5 ist das Bolzensicherungselement 20 als die oben beschriebene Hülse 21 ausgebildet, welche auf das Außengewinde 16 des Schafts 12 aufgeschraubt ist. Das Bolzensicherungselement 20 klemmt das erste und das zweite Bauteil 101, 102 zwischen dem Anlageabschnitt 11 des Bolzens 10 und der Scheibe 30 in Bezug auf die Längsrichtung L ein.

Der in Fig. 5 gezeigte Bauteil-Fixierungsanordnung 99 kann insbesondere in folgenden Schritten hergestellt werden:
- Anordnen des ersten Bauteils 101 und des zweiten Bauteils 102 relativ zueinander derart, dass die erste Durchgangsbohrung 103 und zweite Durchgangsbohrung 104 übereinander liegen;
- Anordnen der Scheibe 30 an dem zweiten Bauteil 102 derart, dass die innere Entlüftungsnut 34 dem zweiten Bauteil 102 zugewandt und in Bezug auf die radiale Richtung R innerhalb der zweiten Durchgangsbohrung 104 angeordnet ist;
- Durchführen des Schafts 12 des Bolzens 10 durch die erste und die zweite Durchgangsbohrung 103, 104 sowie durch die Ausnehmung 31 der Scheibe 30 und dadurch In-Anlage-Bringen des Anlageabschnitts 11 an das erste Bauteil 101, insbesondere an die erste Oberfläche 101a des ersten Bauteils 101;und
- Einklemmen des ersten und des zweiten Bauteils 101, 102 zwischen dem Anlageabschnitt 11 des Bolzens 10 und der Scheibe 30 durch Fixieren des Bolzensicherungselements 20 an dem Schaft 12 des Bolzens 10, beispielsweise mittels Aufschrauben der Hülse 21 auf den Schaft 12.

Fig. 6 zeigt die Bauteilanordnung 100, welche ausgehende von der in Fig. 5 gezeigten Bauteil-Fixierungsanordnung 99 gebildet wurde. Bei der Bauteilanordnung 100 ist ein sich zumindest zwischen dem Schaft 12 und dem zweiten Bauteil 102 innerhalb der zweiten Durchgangsbohrung 104 erstreckender Innenraum 105 mit einem gehärteten Füllmaterial 110 gefüllt. Ausgehend von der Bauteil-Fixierungsanordnung 99 wird die Bauteilanordnung 100 durch Injizieren des härtbaren Füllmaterials 110 in einem flüssigen Zustand in den Injektionslängskanal 13 des Bolzens ausgebildet. Über den Injektionsquerkanal 14 gelangt das flüssige Füllmaterial 110 in den Innenraum 105 und füllt diesen aus. Vor dem Injizieren sich in dem Innenraum 105 befindliche Luft wird über die äußere Entlüftungsnut 33 abgeführt. In einem teilweise gefüllten Zustand kann weiterhin eine zuverlässige Abfuhr von Luft aus dem Innenraum über die innere Entlüftungsnut 34 erfolgen, durch welche die Luft an die äußere Entlüftungsnut 33 weitergeführt wird. Es kann vorgesehen sein, dass solange Füllmaterial 105 injiziert wird, bis dieses aus der äußeren Entlüftungsnut 33 austritt, wie dies beispielhaft in Fig. 6 gezeigt ist. Abschließend erfolgt ein Härten des Füllmaterials 105, beispielsweise durch Erwärmen desselben.

Das Füllmaterial 110 kann insbesondere durch ein Epoxidharz ausgebildet sein.

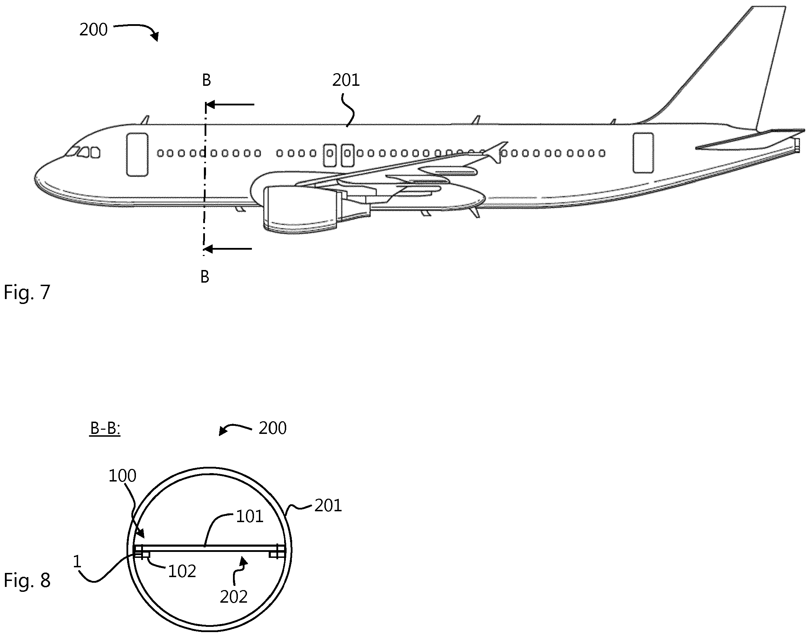

Fig. 7 zeigt beispielhaft ein Luftfahrzeug 200 in Form eines Flugzeugs, welches die Bauteilanordnung 100 aufweist. Fig. 8 zeigt schematisch und in vereinfachter Weise eine Schnittansicht eines Rumpfs 201 des Luftfahrzeugs 200. Die Bauteilanordnung 100 kann insbesondere zur Verbindung eines Bodens 202 mit einer Rumpfstruktur verwendet werden. Wie in Fig. 8 beispielhaft gezeigt ist, kann das erste Bauteil 101 der Bauteilanordnung 100 beispielsweise durch eine den Boden bildende Platte ausgebildet sein. Das zweite Bauteil 102 der Bauteilanordnung 100 kann beispielsweise durch einen Spant gebildet sein.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Befestigungsmontagesatz
- 10: Bolzen
- 10s: Stirnfläche des Bolzens
- 11: Anlageabschnitt
- 11a: Anlagefläche
- 11b: Stirnfläche des Anlageabschnitts
- 12: Schaft
- 12a: Außenumfangsfläche des Schafts
- 13: Injektionslängskanal
- 14: Injektionsquerkanal
- 14A: Öffnung der Außenumfangsfläche des Schafts
- 14B: Abschnitt eines Rands des Injektionskanals
- 15: Ende des Schafts
- 16: Außengewinde
- 17: erster Endabschnitt
- 18: Ende des Bolzens
- 19: Eingriffsbereich
- 20: Bolzensicherungselement
- 21: Hülse
- 21A: erster Längsabschnitt der Hülse
- 21B: zweiter Längsabschnitt der Hülse
- 22: Innengewinde
- 23: Einkerbung
- 30: Scheibe
- 30a: erste Oberfläche der Scheibe
- 30b: zweite Oberfläche der Scheibe
- 30c: Umfangsoberfläche der Scheibe
- 31: Ausnehmung
- 32: Umfangsrand der Scheibe
- 33: äußere Entlüftungsnut
- 34: innere Entlüftungsnut
- 99: Bauteil-Fixierungsanordnung
- 100: Bauteilanordnung
- 101: erstes Bauteil
- 101a: erste Oberfläche des ersten Bauteils
- 101b: zweite Oberfläche des ersten Bauteils
- 101i: Innenfläche des ersten Bauteils
- 102: zweites Bauteil
- 102a: erste Oberfläche des zweiten Bauteils
- 102b: zweite Oberfläche des zweiten Bauteils
- 102i: Innenfläche des zweiten Bauteils
- 103: erste Durchgangsbohrung
- 104: zweite Durchgangsbohrung
- 105: Innenraum
- 110: Füllmaterial
- 200: Luftfahrzeug
- 201: Rumpf
- 202: Boden
- d13: Durchmesser des Injektionslängskanals
- d14: Durchmesser des Injektionsquerkanals
- d30: Durchmesser der Scheibe
- d31: Durchmesser der Ausnehmung der Scheibe
- d103: Durchmesser der ersten Durchgangsbohrung
- d104: Durchmesser der zweiten Durchgangsbohrung
- L: Längsrichtung
- M12: Mittelachse des Schafts
- M103: Mittelachse der ersten Durchgangsbohrung
- M104: Mittelachse der zweiten Durchgangsbohrung
- R: radiale Richtung
- t30: Dicke der Scheibe
- t33: Nuttiefe der äußeren Entlüftungsnut
- t34: Nuttiefe der inneren Entlüftungsnut

## Patentansprüche

1. Befestigungsmontagesatz (1) mit:
einem Bolzen (10) mit einem Anlageabschnitt (11) und einem sich von diesem aus in einer Längsrichtung (L) erstreckenden Schaft (12), welcher einen sich entlang der Längsrichtung (L) erstreckenden Injektionslängskanal (13) und einen sich zwischen diesem und einer Außenumfangsfläche (12a) des Schafts (12) erstreckenden Injektionsquerkanal (14) aufweist;
einem an dem Schaft (12) fixierbaren Bolzensicherungselement (20); und
einer zwischen dem Bolzensicherungselement (20) und dem Anlageabschnitt (11) des Bolzens (10) anordenbaren Scheibe (30) mit einer Ausnehmung (31), durch welche der Schaft (12) des Bolzens (10) hindurchführbar ist, und einer sich von einem Umfangsrand (32) der Scheibe (30) in Richtung der Ausnehmung (31) erstreckenden äußeren Entlüftungsnut (33), welche in eine sich entlang der Ausnehmung (31) erstreckende innere Entlüftungsnut (34) einmündet.

2. Befestigungsmontagesatz (1) nach Anspruch 1, wobei sich die innere Entlüftungsnut (34) als geschlossener Ring, insbesondere konzentrisch, um die Ausnehmung (31) herum erstreckt.

3. Befestigungsmontagesatz (1) nach Anspruch 1 oder 2, wobei die äußere Entlüftungsnut (33) und die innere Entlüftungsnut (34) jeweils eine Nuttiefe (t33; t34) in einem Bereich zwischen 0,1 mm und 1 mm aufweisen.

4. Befestigungsmontagesatz (1) nach einem der voranstehenden Ansprüche, wobei die Scheibe (30) einstückig mit dem Bolzensicherungselement (20) ausgebildet ist.

5. Befestigungsmontagesatz (1) nach einem der voranstehenden Ansprüche, wobei der Injektionslängskanal (13) sich von dem Anlageabschnitt (11) aus in den Schaft (12) erstreckt.

6. Befestigungsmontagesatz (1) nach einem der Ansprüche 1 bis 4, wobei der Injektionslängskanal (13) sich von einem in Bezug auf die Längsrichtung (L) entgegengesetzt zu dem Anlageabschnitt (11) gelegenen Ende (15) aus in den Schaft (12) erstreckt.

7. Befestigungsmontagesatz (1) nach einem der voranstehenden Ansprüche, wobei der Injektionslängskanal (13) und der Injektionsquerkanal (14) jeweils einen Durchmesser (d13; d14) in einem Bereich zwischen 0,5 mm und 2,5 mm aufweisen.

8. Befestigungsmontagesatz (1) nach einem der voranstehenden Ansprüche, wobei das Bolzensicherungselement (20) als eine Hülse (21) ausgebildet ist, welche ein zum Eingriff in ein an dem Schaft (12) ausgebildetes Außengewinde (16) vorgesehenes Innengewinde (22) aufweist, wobei die Hülse (21) bevorzugt eine sich in einer Umfangsrichtung der Hülse (21) erstreckende Einkerbung (23) zur Bildung einer Sollbruchstelle der Hülse (21) aufweist.

9. Bauteilanordnung (100) mit
einem eine erste Durchgangsbohrung (103) aufweisenden ersten Bauteil (101);
einem eine zweite Durchgangsbohrung (104) aufweisenden zweiten Bauteil (102), wobei das zweite Bauteil (102) derart relativ zu dem ersten Bauteil (101) angeordnet ist, dass die erste Durchgangsbohrung (103) und zweite Durchgangsbohrung (104) übereinander liegen; und
einem Befestigungsmontagesatz (1) nach einem der voranstehenden Ansprüche;
wobei der Anlageabschnitt (11) des Bolzens (10) an dem ersten Bauteil (101) anliegtund der Schaft (12) des Bolzens sich durch die erste Durchgangsbohrung (103) und die zweite Durchgangsbohrung (104) hindurch erstreckt;
wobei die Scheibe (31) an dem zweiten Bauteil (102) anliegt und sich der Schaft (12) des Bolzens (10) durch die Ausnehmung (31) der Scheibe (31) hindurch erstreckt;
wobei die innere Entlüftungsnut (34) der Scheibe (31) dem zweiten Bauteil (102) zugewandt und in Bezug auf eine radiale Richtung (R) innerhalb der zweiten Durchgangsbohrung (104) angeordnet ist;
wobei das Bolzensicherungselement (20) an dem Schaft (12) des Bolzens (10) fixiert ist und das erste und das zweite Bauteil (101; 102) zwischen dem Anlageabschnitt (11) des Bolzens (10) und der Scheibe (30) einklemmt; und wobei ein sich zumindest zwischen dem Schaft (12) und dem zweiten Bauteil (102) innerhalb der zweiten Durchgangsbohrung (104) erstreckender Innenraum (105) mit einem gehärteten Füllmaterial (110) gefüllt ist

10. Bauteilanordnung (100) nach Anspruch 9, wobei das erste Bauteil (101) und/oder das zweite Bauteil (102) als Faserverbundbauteil ausgeführt ist.

11. Bauteilanordnung (100) nach Anspruch 9 oder 10, wobei das Füllmaterial (110) durch ein Epoxidharz ausgebildet ist.

12. Bauteilanordnung (100) nach einem der Ansprüche 9 bis 11, wobei das Füllmaterial (110) aus der äußeren Entlüftungsnut (33) austritt.

13. Bauteilanordnung (100) nach einem der Ansprüche 9 bis 12, wobei die erste Durchgangsbohrung (103) einen kleineren Durchmesser (d103) als die zweite Durchgangsbohrung (104) aufweist und der Schaft (12) des Bolzens (10) an der die erste Durchgangsbohrung (103) definierenden Innenfläche (101i) des ersten Bauteils (101) anliegt.

14. Bauteilanordnung (100) nach einem der Ansprüche 9 bis 13, wobei ein in Bezug auf die Längsrichtung (L) dem Anlageabschnitt (11) des Bolzens (10) zugewandt gelegener Abschnitt (14B) eines Rands des Injektionsquerkanals (14) des Bolzens (10) mit einer dem zweiten Bauteil (102) zugewandten Oberfläche (101b) des ersten Bauteils (101) fluchtet.

15. Verfahren zur Ausbildung einer Bauteilanordnung (100) mit folgenden Verfahrenssch ritten:
Anordnen eines ersten Bauteils (101) und eines zweiten Bauteils (102) relativ zueinander derart, dass eine erste Durchgangsbohrung (103) des ersten Bauteils (101) und zweite Durchgangsbohrung (104) des zweiten Bauteils (102) übereinander liegen;
Anordnen einer Scheibe (30), welche eine Ausnehmung (31) und eine sich von einem Umfangsrand (32) der Scheibe (30) in Richtung der Ausnehmung (31) erstreckende äußere Entlüftungsnut (33), die in eine sich entlang der Ausnehmung (31) erstreckende innere Entlüftungsnut (34) einmündet, aufweist, an dem zweiten Bauteil (102) derart, dass die innere Entlüftungsnut (34) dem zweiten Bauteil (102) zugewandt und in Bezug auf eine radiale Richtung (R) innerhalb der zweiten Durchgangsbohrung (104) angeordnet ist;
Durchführen eines sich von einem Anlageabschnitt (11) aus in einer Längsrichtung (L) erstreckenden Schafts (12) eines Bolzens (10) durch die erste und die zweite Durchgangsbohrung (103; 104) sowie durch die Ausnehmung (31) der Scheibe (30);
Einklemmen des ersten und des zweiten Bauteils (101; 102) zwischen dem Anlageabschnitt (11) des Bolzens (10) und der Scheibe (30) durch Fixieren eines Bolzensicherungselements (20) an dem Schaft (12) des Bolzens (10);
Injizieren eines härtbaren Füllmaterials (110) in einen sich entlang der Längsrichtung (L) erstreckenden Injektionslängskanal (13) des Schafts (12) des Bolzens (10) und durch einen sich zwischen dem Injektionsquerkana! (13) und einer Außenumfangsfläche (12a) des Schafts (12) erstreckenden Injektionsquerkanal (14) hindurch Ausfüllen eines sich zumindest zwischen dem Schaft (12) und dem zweiten Bauteil (102) innerhalb der zweiten Durchgangsbohrung (104) erstreckenden Innenraums (105) mit dem Füllmaterial (110); und
Härten des Füllmaterials (110).

## Claims

1. Fastening assembly kit (1) having:
a bolt (10) with an abutment portion (11) and a shank (12) extending therefrom in a longitudinal direction (L), said shank having a longitudinal injection channel (13) which extends along the longitudinal direction (L) and a transverse injection channel (14) which extends between said longitudinal injection channel and an outer circumferential surface (12a) of the shank (12);
a bolt securing element (20) which can be fixed to the shank (12); and
a disc (30) which can be arranged between the bolt securing element (20) and the abutment portion (11) of the bolt (10) and which has an aperture (31) through which the shank (12) of the bolt (10) can be guided, and an outer ventilation groove (33) which extends from a circumferential edge (32) of the disc (30) in the direction of the aperture (31) and which discharges into an inner ventilation groove (34) extending along the aperture (31).

2. Fastening assembly kit (1) according to Claim 1, wherein the inner ventilation groove (34) extends in the form of a closed ring, in particular concentrically, about the aperture (31).

3. Fastening assembly kit (1) according to Claim 1 or 2, wherein the outer ventilation groove (33) and the inner ventilation groove (34) each have a groove depth (t33; t34) in a range of between 0.1 mm and 1 mm.

4. Fastening assembly kit (1) according to one of the preceding claims, wherein the disc (30) is formed in one piece with the bolt securing element (20).

5. Fastening assembly kit (1) according to one of the preceding claims, wherein the longitudinal injection channel (13) extends from the abutment portion (11) into the shank (12).

6. Fastening assembly kit (1) according to one of Claims 1 to 4, wherein the longitudinal injection channel (13) extends from an end (15) situated opposite to the abutment portion (11) in relation to the longitudinal direction (L) into the shank (12) .

7. Fastening assembly kit (1) according to one of the preceding claims, wherein the longitudinal injection channel (13) and the transverse injection channel (14) each have a diameter (d13; d14) in a range of between 0.5 mm and 2.5 mm.

8. Fastening assembly kit (1) according to one of the preceding claims, wherein the bolt securing element (20) is configured in the form of a sleeve (21) which has an internal thread (22) intended to engage in an external thread (16) formed on the shank (12), wherein the sleeve (21) preferably has a notch (23) which extends in a circumferential direction of the sleeve (21) for formation of a predetermined breaking point of the sleeve (21).

9. Component arrangement (100) having a first component (101) having a first through-hole (103) ;
a second component (102) having a second through-hole (104), wherein the second component (102) is arranged relative to the first component (101) in such a way that the first through-hole (103) and second through-hole (104) lie one on top of the other; and
a fastening assembly kit (1) according to one of the preceding claims;
wherein the abutment portion (11) of the bolt (10) bears against the first component (101) and the shank (12) of the bolt extends through the first through-hole (103) and the second through-hole (104) ;
wherein the disc (31) bears against the second component (102) and the shank (12) of the bolt (10) extends through the aperture (31) of the disc (31); wherein the inner ventilation groove (34) of the disc (31) faces towards the second component (102) and is arranged, in relation to a radial direction (R), within the second through-hole (104);
wherein the bolt securing element (20) is fixed to the shank (12) of the bolt (10) and clamps the first and the second component (101; 102) between the abutment portion (11) of the bolt (10) and the disc (30); and
wherein an interior space (105) extending at least between the shank (12) and the second component (102) within the second through-hole (104) is filled with a cured filling material (110).

10. Component arrangement (100) according to Claim 9, wherein the first component (101) and/or the second component (102) are/is embodied as a fibre composite component.

11. Component arrangement (100) according to Claim 9 or 10, wherein the filling material (110) is formed by an epoxy resin.

12. Component arrangement (100) according to one of Claims 9 to 11, wherein the filling material (110) exits out of the outer ventilation groove (33).

13. Component arrangement (100) according to one of Claims 9 to 12, wherein the first through-hole (103) has a smaller diameter (d103) than the second through-hole (104) and the shank (12) of the bolt (10) bears against that inner surface (101i) of the first component (101) which defines the first through-hole (103).

14. Component arrangement (100) according to one of Claims 9 to 13, wherein a portion (14B) of an edge of the transverse injection channel (14) of the bolt (10), said portion being situated so as to face towards the abutment portion (11) of the bolt (10) in relation to the longitudinal direction (L), is aligned with a surface (101b) of the first component (101) facing towards the second component (102).

15. Method for forming a component arrangement (100), having the following method steps:
arranging a first component (101) and a second component (102) relative to one another in such a way that a first through-hole (103) of the first component (101) and second through-hole (104) of the second component (102) lie one on top of the other;
arranging a disc (30), which has an aperture (31) and an outer ventilation groove (33) which extends from a circumferential edge (32) of the disc (30) in the direction of the aperture (31) and which discharges into an inner ventilation groove (34) extending along the aperture (31), on the second component (102) in such a way that the inner ventilation groove (34) faces towards the second component (102) and is arranged, in relation to a radial direction (R), within the second through-hole (104) ;
guiding a shank (12) of a bolt (10), said shank extending from an abutment portion (11) in a longitudinal direction (L) , through the first and
the second through-hole (103; 104) and through the aperture (31) of the disc (30);
clamping the first and the second component (101; 102) between the abutment portion (11) of the bolt (10) and the disc (30) by fixing a bolt securing element (20) to the shank (12) of the bolt (10);
injecting a curable filling material (110) into a longitudinal injection channel (13), which extends along the longitudinal direction (L), of the shank (12) of the bolt (10) and through a transverse injection channel (14) extending between the transverse injection channel (13) and an outer circumferential surface (12a) of the shank (12), filling an interior space (105) extending at least between the shank (12) and the second component (102) within the second through-hole (104) with the filling material (110); and
curing the filling material (110).

## Revendications

1. Visserie de fixation (1), comprenant :
un boulon (10) doté d'une partie d'appui (11) et d'une tige (12) s'étendant à partir de celle-ci dans une direction longitudinale (L) et qui présente un canal d'injection longitudinal (13) s'étendant le long de la direction longitudinale (L) et un canal d'injection transversal (14) s'étendant entre celui-ci et une surface circonférentielle extérieure (12a) de la tige (12) ;
un élément de blocage de boulon (20) pouvant être fixé sur la tige (12) ; et
une rondelle (30) pouvant être disposée entre l'élément de blocage de boulon (20) et la partie d'appui (11) du boulon (10), dotée d'un évidement (31) pouvant être traversé par la tige (12) du boulon (10), et d'une rainure d'aération extérieure (33) s'étendant à partir d'un bord circonférentiel (32) de la rondelle (30) en direction de l'évidement (31) et qui débouche sur une rainure d'aération intérieure (34) s'étendant le long de l'évidement (31).

2. Visserie de fixation (1) selon la revendication 1, dans laquelle la rainure d'aération intérieure (34) s'étend sous la forme d'un anneau fermé, en particulier de manière concentrique, autour de l'évidement (31).

3. Visserie de fixation (1) selon la revendication 1 ou 2, dans laquelle la rainure d'aération extérieure (33) et la rainure d'aération intérieure (34) présentent respectivement une profondeur de rainure (t33 ; t34) comprise dans une plage entre 0,1 mm et 1 mm.

4. Visserie de fixation (1) selon l'une quelconque des revendications précédentes, dans laquelle la rondelle (30) est réalisée d'un seul tenant avec l'élément de blocage de boulon (20).

5. Visserie de fixation (1) selon l'une quelconque des revendications précédentes, dans laquelle le canal d'injection longitudinal (13) s'étend à partir de la partie d'appui (11) dans la tige (12).

6. Visserie de fixation (1) selon l'une quelconque des revendications 1 à 4, dans laquelle le canal d'injection longitudinal (13) s'étend dans la tige (12) à partir d'une extrémité (15) située à l'opposé de la partie d'appui (11) par rapport à la direction longitudinale (L).

7. Visserie de fixation (1) selon l'une quelconque des revendications précédentes, dans laquelle le canal d'injection longitudinal (13) et le canal d'injection transversal (14) présentent respectivement un diamètre (d13 ; d14) compris dans une plage entre 0,5 mm et 2,5 mm.

8. Visserie de fixation (1) selon l'une quelconque des revendications précédentes, dans laquelle l'élément de blocage de boulon (20) est réalisé sous la forme d'une douille (21) qui présente un taraudage (22) prévu pour venir en prise avec un filetage (16) réalisé sur la tige (12), la douille (21) présentant de préférence une encoche (23) s'étendant dans une direction circonférentielle de la douille (21) pour former un point destiné à la rupture de la douille (21).

9. Assemblage de composants (100), comprenant
un premier composant (101) présentant un premier perçage traversant (103) ;
un deuxième composant (102) présentant un deuxième perçage traversant (104), le deuxième composant (102) étant disposé par rapport au premier composant (101) de telle sorte que le premier perçage traversant (103) et le deuxième perçage traversant (104) sont superposés ; et
une visserie de fixation (1) selon l'une quelconque des revendications précédentes ;
la partie d'appui (11) du boulon (10) étant adjacente au premier composant (101) et la tige (12) du boulon s'étendant à travers le premier perçage traversant (103) et le deuxième perçage traversant (104) ;
la rondelle (31) étant adjacente au deuxième composant (102) et la tige (12) du boulon (10) s'étendant à travers l'évidement (31) de la rondelle (31) ;
la rainure d'aération intérieure (34) de la rondelle (31) étant tournée vers le deuxième composant (102) et étant disposée par rapport à une direction radiale (R) à l'intérieur du deuxième perçage traversant (104) ;
l'élément de blocage de boulon (20) étant fixé sur la tige (12) du boulon (10) et serrant le premier et le deuxième composant (101 ; 102) entre la partie d'appui (11) du boulon (10) et la rondelle (30) ; et
un espace intérieur (105) s'étendant au moins entre la tige (12) et le deuxième composant (102) à l'intérieur du deuxième perçage traversant (104) étant rempli d'un matériau de remplissage durci (110).

10. Assemblage de composants (100) selon la revendication 9, dans lequel le premier composant (101) et/ou le deuxième composant (102) sont réalisés sous forme de composants renforcés par des fibres.

11. Assemblage de composants (100) selon la revendication 9 ou 10, dans lequel le matériau de remplissage (110) est réalisé par une résine époxy.

12. Assemblage de composants (100) selon l'une quelconque des revendications 9 à 11, dans lequel le matériau de remplissage (110) déborde de la rainure d'aération extérieure (33).

13. Assemblage de composants (100) selon l'une quelconque des revendications 9 à 12, dans lequel le premier perçage traversant (103) présente un diamètre (d103) plus petit que le deuxième perçage traversant (104), et la tige (12) du boulon (10) est adjacente à la surface intérieure (101i) définissant le premier perçage traversant (103) du premier composant (101).

14. Assemblage de composants (100) selon l'une quelconque des revendications 9 à 13, dans lequel une partie (14B) située en étant tournée vers la partie d'appui (11) du boulon (10), par rapport à la direction longitudinale (L), d'un bord du canal d'injection transversal (14) du boulon (10) est alignée sur une surface (101b) du premier composant (101), tournée vers le deuxième composant (102).

15. Procédé de réalisation d'un assemblage de composants (100), comprenant les étapes de procédé suivantes consistant à :
disposer un premier composant (101) et un deuxième composant (102) l'un par rapport à l'autre de telle sorte qu'un premier perçage traversant (103) du premier composant (101) et un deuxième perçage traversant (104) du deuxième composant (102) sont superposés ;
disposer une rondelle (30) qui présente un évidement (31) et une rainure d'aération extérieure (33) s'étendant à partir d'un bord circonférentiel (32) de la rondelle (30) en direction de l'évidement (31), ladite rainure débouchant sur une rainure d'aération intérieure (34) s'étendant le long de l'évidement (31), sur le deuxième composant (102) de telle sorte que la rainure d'aération intérieure (34) est tournée vers le deuxième composant (102) et est disposée à l'intérieur du deuxième perçage traversant (104), par rapport à une direction radiale (R) ;
faire passer une tige (12) d'un boulon (10), s'étendant à partir d'une partie d'appui (11) dans une direction longitudinale (L), à travers le premier et le deuxième perçage traversant (103 ; 104) ainsi qu'à travers l'évidement (31) de la rondelle (30) ;
serrer le premier et le deuxième composant (101 ; 102) entre la partie d'appui (11) du boulon (10) et la rondelle (30) en fixant un élément de blocage de boulon (20) à la tige (12) du boulon (10) ;
injecter un matériau de remplissage durcissable (110) dans un canal d'injection longitudinal (13), s'étendant le long de la direction longitudinale (L), de la tige (12) du boulon (10) et à travers un canal d'injection transversal (14), s'étendant entre le canal d'injection transversal (13) et une surface de circonférence extérieure (12a), de la tige (12), remplir avec le matériau de remplissage (110) un espace intérieur (105) s'étendant au moins entre la tige (12) et le deuxième composant (102) à l'intérieur du deuxième perçage traversant (104) ; et
laisser durcir le matériau de remplissage (110) .
